Europäisches Patentamt

European Patent Office

Office européen des brevets

(19)

(11) **EP 0 834 225 B1**

(12) **FASCICULE DE BREVET EUROPEEN**

(45) Date de publication et mention
de la délivrance du brevet:
**03.03.1999 Bulletin 1999/09**

(21) Numéro de dépôt: **96922940.0**

(22) Date de dépôt: **18.06.1996**

(51) Int Cl.$^6$: **H04B 7/204**, H04B 7/04

(86) Numéro de dépôt international:
**PCT/FR96/00934**

(87) Numéro de publication internationale:
**WO 97/01226 (09.01.1997 Gazette 1997/03)**

(54) **PROCEDE DE TARAGE DES CHAINES D'EMISSION ET DE RECEPTION DES VOIES FORMEES PAR UNE STATION DE BASE D'UN SYSTEME DE RADIOCOMMUNICATION ENTRE MOBILES**

VERFAHREN ZUR KALIBRIERUNG VON SENDE/EMPFANGSKETTEN EINER BASISSTATION EINES MOBILEN FUNKKOMMUNIKATIONSSYSTEMS

METHOD FOR SETTING TRANSMIT AND RECEIVE CHAINS OF CHANNELS FORMED BY A MOBILE RADIO SYSTEM BASE STATION

(84) Etats contractants désignés:
**CH DE DK ES FI FR GB IT LI SE**

(30) Priorité: **23.06.1995 FR 9507587**

(43) Date de publication de la demande:
**08.04.1998 Bulletin 1998/15**

(73) Titulaire: **THOMSON-CSF**
**75008 Paris (FR)**

(72) Inventeurs:
• **MONOT, Jean-Jacques**
**F-92402 Courbevoie Cédex (FR)**
• **BERRANGER, Robert**
**F-92402 Courbevoie Cédex (FR)**
• **MULTEDO, Gilbert**
**F-92402 Courbevoie Cédex (FR)**

(74) Mandataire: **Lincot, Georges et al**
**Thomson-CSF Propriété Intellectuelle,**
**13, Avenue du Président Salvador Allende**
**94117 Arcueil Cédex (FR)**

(56) Documents cités:
**US-A- 5 260 968**

• **MILCOM '92 - 'COMMUNICATIONS - FUSING COMMAND, CONTROL AND INTELLIGENCE' CONFERENCE RECORD (CAT. NO. 92CH3131-0), SAN DIEGO, CA, USA, 11-14 OCT. 1992, ISBN 0-7803-0585-X, 1992, NEW YORK, NY, USA, IEEE, USA, pages 1028-1034 vol.3, XP000577338 AVANT R ET AL: "STGT multiple access beamforming system modelling and analysis"**
• **CONFERENCE RECORD OF THE TWENTY-SEVENTH ASILOMAR CONFERENCE ON SIGNALS, SYSTEMS AND COMPUTERS (CAT. NO.93CH3312-6), PROCEEDINGS OF 27TH ASILOMAR CONFERENCE ON SIGNALS, SYSTEMS AND COMPUTERS, PACIFIC GROVE, CA, USA, 1-3 NOV. 1993, ISBN 0-8186-4120-7, 1993, LOS ALAMITOS, CA, USA, IEEE COMPUT. SOC. PRESS, USA, pages 1432-1436 vol.2, XP000438543 GERLACH D ET AL: "Base station transmitter antenna arrays with mobile to base feedback"**

## Description

La présente invention concerne un procédé et un dispositif pour sa mise en oeuvre de tarage des chaînes d'émission et de réception des voies formées par un dispositif d'émission/réception multivoie d'une station de base d'un système de radiocommunications, utilisant notamment une technique d'émission/réception multivoie connue sous l'abréviation AMRS signifiant "Accès Multiple à Répartition Spatiale".

Les systèmes de radiocommunication avec des mobiles sont pour la plupart basés sur le concept de réseau cellulaire, pour lequel une station de base communique avec un certain nombre de mobiles dans la cellule dont elle a la charge.

Les stations de base n'utilisent actuellement pour l'émission et la réception des signaux que des systèmes antennaires simples soit de type mono-capteur ou de type multi-capteur, avec combinaison RF pour assurer une couverture complète, soit de type bi-capteur avec sélection pour obtenir une diversité d'espace en réception.

Le concept de l'AMRS, maintenant bien répandu dans la littérature, a pour but d'augmenter la capacité d'une station de base en effectuant une émission et une réception multivoie de manière adaptative et intelligente.

La mise en place de cette technique se heurte toutefois à des problèmes de mise en oeuvre et de maîtrise des distorsions dans les chaînes d'émission et de réception. En particulier, le phénomène le plus perturbant est le désappairage des voies en phase et en amplitude. En réception, ce phénomène empêchera une localisation correcte du mobile et donc l'affectation d'une fréquence AMRS. En émission, ce problème pourra provoquer l'émission d'un signal dans une direction non désirée.

Les techniques pour pallier à ces problèmes sont bien connues pour la réception, car mises en oeuvre dans les radiogoniomètres et consistent à effectuer une calibration de la base d'antenne puis un tarage fréquent des voies de réception.

En émission, le problème est plus complexe, car il s'agit d'effectuer un tarage des voies émission (après calibration de la base d'antennes) tout en étant indépendant de la structure de la base d'antennes.

L'invention a pour but de pallier les inconvénients précités.

A cet effet, l'invention a pour objet un procédé permettant le tarage régulier de la chaîne d'émission et de réception de chacune des voies formées par une station de base d'un système de radiocommunication avec des mobiles, comportant une base d'antennes émission/réception et un dispositif d'émission/réception multivoie, caractérisé en ce qu'il consiste après une étape de calibration de la base d'antennes :

- dans une étape de tarage des chaînes de réception relatives à chaque voie, à distribuer un premier signal de tarage déterminé, de manière synchrone sur chacune des chaînes de réception, à calculer un filtre d'égalisation inversant les fonctions de transfert relatives à chaque chaîne de réception,
- dans une étape de tarage des chaînes d'émission relatives à chaque voie, à distribuer un deuxième signal de tarage déterminé, de manière synchrone sur chacune des chaînes d'émission, à prélever dans chacune des voies une partie du signal d'émission avant sa transmission à la base d'antennes pour le réinjecter dans les chaînes de réception, et à calculer un filtre d'égalisation inversant les fonctions de transfert relatives à chaque chaîne d'émission,
- à effectuer la réception des signaux en provenance de la base d'antennes à travers les filtres d'égalisation précédemment calculés pour les chaînes de réception, ou l'émission des signaux en provenance du dispositif d'émission/réception multivoie à travers les filtres d'égalisation précédemment calculés pour les chaînes d'émission.

La présente invention a pour avantage d'effectuer un tarage des voies émission et réception d'un système de radiocommunication exploitant une technique AMRS, permettant d'assurer la maîtrise du front d'onde des signaux reçus et émis par le système en utilisant des signaux de tarage évitant les phénomènes de couplage entre antennes.

D'autres avantages et caractéristiques de la présente invention apparaîtront plus clairement à la lecture de la description qui suite faite en regard des figures annexées qui représentent :

- la figure 1, un système de radiocommunication intégrant un dispositif pour la mise en oeuvre du procédé selon l'invention,
- la figure 2, un schéma synoptique du procédé selon l'invention,
- la figure 3, un schéma fonctionnel d'un dispositif pour la mise en oeuvre du procédé selon l'invention
- la figure 4, une représentation fréquentielle et temporelle du signal de tarage des chaînes d'émission,
- la figure 5, une première solution de répartition des porteuses à l'intérieur de la bande utile,
- la figure 6, une deuxième solution de répartition des porteuses à l'intérieur de la bande utile,
- la figure 7a et 7b, respectivement la zone linéaire de l'amplification des chaînes d'émission, et l'effet de distorsion de phase en fonction de l'amplitude de l'enveloppe modulante, et
- la figure 8, un schéma fonctionnel correspondant à l'étage de pré-correction de l'amplification de la chaîne d'émission.

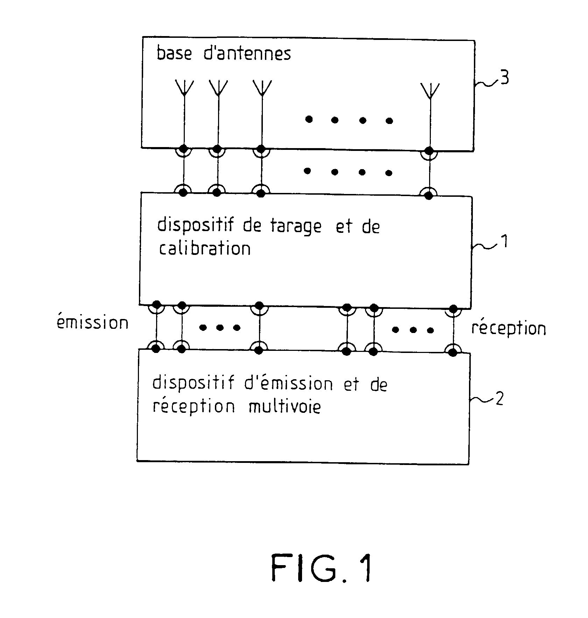

Un dispositif 1 mettant en oeuvre le procédé selon l'invention est disposé en interface entre un dispositif d'émission/réception AMRS 2 et une base d'antennes 3, comme indiqué sur la figure 1.

Il est par conséquent indépendant des traitements AMRS effectué par le dispositif ad hoc et met en oeuvre autant de voies émission et de voies réception que d'antennes.

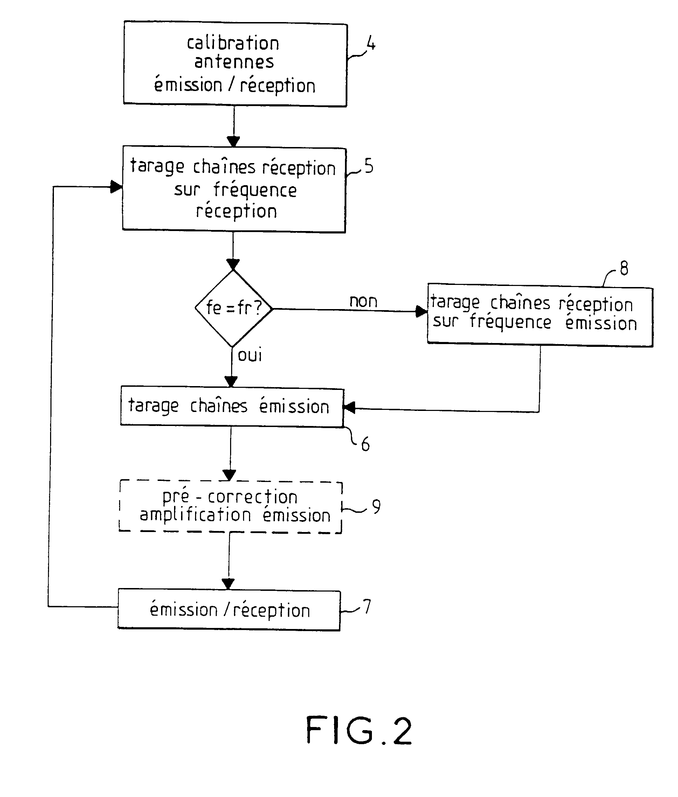

La figure 2 illustre un schéma synoptique du procédé selon l'invention.

Après une première étape 4 de calibration des antennes de la base d'antennes, le procédé selon l'invention consiste dans une deuxième étape 5, au tarage des chaînes de réception relatives à chaque voie, puis dans une troisième étape 6, au tarage des chaînes d'émission relatives à chaque voie.

Une fois le tarage effectué, dans une quatrième étape 7, la réception ou l'émission des signaux respectivement reçus par la base d'antenne 3 ou émis par le dispositif d'émission/réception 2, est effectuée.

A l'étape 8, dans le cas où les fréquences des signaux de réception et d'émission sont différentes, le tarage des chaînes de réception de chacune des voies est effectué à la fréquence du signal d'émission.

Pour pallier la non-linéarité des chaînes d'amplification à l'émission, une étape 9 permet une pré-correction de ces chaînes.

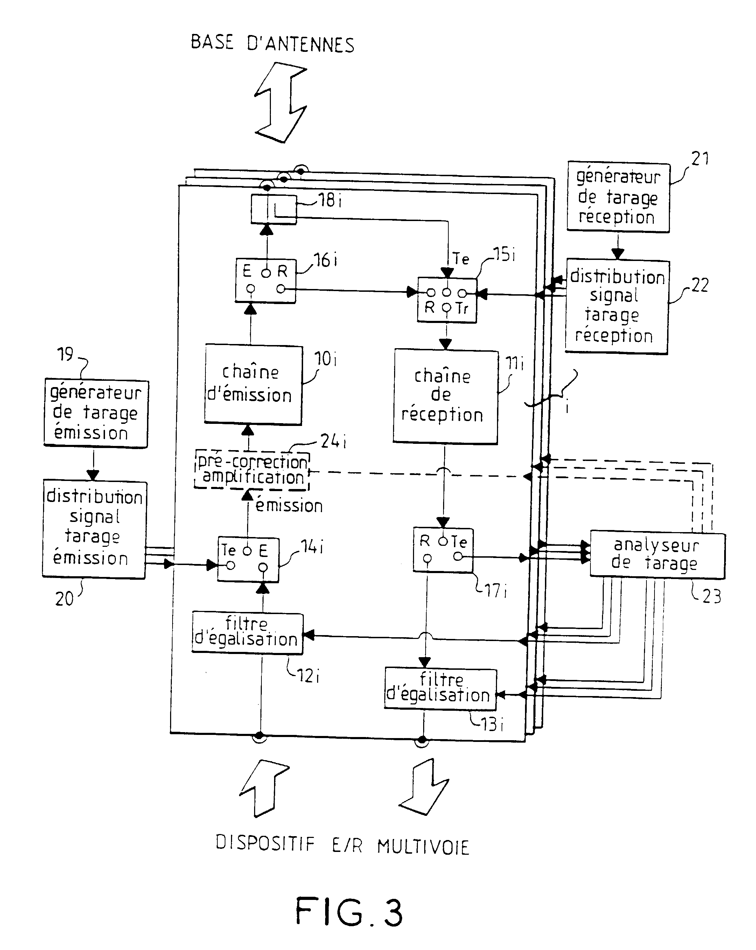

Un dispositif de tarage pour la mise en oeuvre du procédé selon l'invention est illustré par le schéma fonctionnel de la figure 3.

Il est disposé en interface entre le dispositif d'émission/réception multivoie 2, notamment AMRS, et la base d'antennes 3. A chaque antenne, non représentée, correspond une voie formée pour l'émission et la réception. Sur la figure, trois voies i avec i = 1 à 3, sont représentées respectivement par trois plans superposés.

Chaque voie i comporte :

- une chaîne d'émission 10i et de réception 11i,
- un filtre d'égalisation 12i du signal d'émission couplé en entrée de la chaîne d'émission 10i,
- un filtre d'égalisation 13i du signal de réception couplé en sortie de la chaîne de réception 11i.
- un commutateur d'entrée 14i et 15i et de sortie 16i et 17i, respectivement pour la chaîne d'émission 10i et la chaîne de réception 11i, permettant au dispositif de passer dans les différents modes de fonctionnement : tarage réception, tarage émission, émission/réception.
- un coupleur 18i disposé en sortie de la chaîne d'émission 10i, après le commutateur de sortie 16i de la chaîne d'émission 10i, permettant de prélever une partie du signal d'émission avant sa transmission à la base d'antennes 3, pour l'injecter à l'entrée de la chaîne de réception 11i, via le commutateur d'entrée 15i de la chaîne de réception 11i.

Le filtre d'égalisation 12i en émission est disposé en entrée de voie i, avant le commutateur 14 i d'entrée de la chaîne d'émission 10i, et le filtre d'égalisation 13i en réception est disposé en sortie de voie i, après le commutateur 17i de sortie de la chaîne de réception 11i.

Le dispositif comporte ensuite en commun pour toutes les voies i :

- un premier générateur de signal de tarage 19 des chaînes d'émission 10i, couplé à un premier module de distribution 20 distribuant un premier signal de tarage déterminé sur les chaînes d'émission 10i de chacune des voies i via le commutateur d'entrée 14i de la chaîne d'émission 10i, disposé en sortie du filtre d'égalisation 12i. La génération de signal de tarage peut être réalisée directement dans le dispositif émission/réception multivoie.
- un deuxième générateur de signal de tarage 21 des chaînes de réception 11i, couplé à un deuxième module de distribution 22 distribuant un deuxième signal de tarage déterminé sur les chaînes de réception de chacune des voies i via le commutateur d'entrée 15i de la chaîne de réception 11i, et
- un analyseur des signaux de tarage 23 permettant l'analyse des différents signaux de tarage pour adapter les filtres d'égalisation 12i et 13i respectifs aux chaînes d'émission 10i et de réception 11i.

Le dispositif peut comporter en outre un étage de pré-correction 24 des chaînes d'émission disposé entre le filtre d'égalisation 12i et la chaîne d'émission 10i et représenté en trait interrompu sur la figure.

L'analyseur de tarage 23 permet également dans ce cas l'analyse des signaux de correction.

Une description détaillée du fonctionnement du dispositif de tarage pour la mise en oeuvre du procédé selon l'invention est donnée ci-après :

Le tarage 5 des chaînes de réception 11i a pour but de corriger les dérives des fonctions de transfert des chaînes de réception 11i. Ces dérives sont principalement dues aux variations de température à l'intérieur des équipements.

Les filtres d'égalisation 13i en sortie des chaînes de réception 11i ont des fonctions de transfert dont il faut par conséquent suivre l'évolution, en effectuant un tarage 5 de manière cyclique.

Le tarage 5 s'effectue en injectant un signal de tarage dont les caractéristiques sont supposées connues, et en effectuant des mesures permettant de déterminer les fonctions de transfert afin de les corriger. Pour simplifier les mesures, le signal de tarage est constitué de plusieurs porteuses qui permettent d'effectuer une discrétisation fréquentielle des fonctions de transfert.

Les traitements effectués dans un processeur du dispositif émission/réception AMRS étant sensibles aux écarts différentiels d'une voie i à l'autre, ce ne sont pas les fonctions de transfert absolues qu'il faut corriger mais uniquement les écarts différentiels d'une voie i à l'autre.

En notant $H_i(f)$ la fonction de transfert de la voie i, et $\underline{m}_i$ le vecteur des gains complexes mesurés, on obtient :

$$\underline{m}_i(k) = \frac{H_i(f_k)}{H_1(f_k)} \qquad k = 1, \ldots, N \tag{1}$$

la voie 1 servant de référence, $f_k$ étant les fréquences utilisées pour effectuer les mesures et N le nombre de porteuses utilisées.

La mesure des réponses des filtres d'égalisation 13i aux différentes fréquences peuvent être effectuées par FFT, abréviation anglo-saxonne pour "Fast Fourier Transform" ou DFT, abréviation anglo-saxonne pour "Discrete Fourier Transform". Il est préférable de les effectuer successivement et d'utiliser une DFT pour effectuer la mesure, afin d'éviter tout problème d'intermodulation. Dans le cas d'une mesure par FFT, les fréquences utilisées doivent être placées de manière orthogonale, c'est à dire avec un écart en fréquence égal à l'inverse de la durée de la mesure FFT.

Il faut donc calculer un jeu de p coefficients d'un filtre FIR, $\underline{w}_i$, abréviation pour "Filtre à Réponse Impulsionnelle Finie" pour chacune des chaînes de réception 11i, de telle manière que :

$$\left(\frac{H_i(f_k)}{H_1(f_k)}\right) \cdot H_{wi}(f) \approx 1 \tag{2}$$

pour tout f appartenant à la bande utile.

La fonction de transfert $H_{Wi}(f)$ est obtenue de la manière suivante :

$$H_{wi}(f) = \sum_{l=1}^{p} \underline{w}_i(l) \cdot e^{2j\pi fl} \tag{3}$$

Ne connaissant les fonctions de transfert différentielles que pour un ensemble discret de fréquences $\{f_k\}$, une manière simple d'obtenir $\underline{w}_i$ consiste à minimiser au sens des moindres carrés l'erreur entre la fonction de transfert désirée et celle d'un filtre FIR à p coefficients, pour l'ensemble des fréquences mesurées, soit :

$$\min_{\underline{w}_i} \left\| \underline{m}'_i - F \cdot \underline{w}_i \right\|^2 \tag{4}$$

avec :

$$\underline{m}'_i(k) = \frac{1}{\underline{m}_i(k)}$$

et F une matrice pxN telle que :

$$F(m,n) = \exp(-2.j.\pi.f_m.n) \qquad (5)$$

où m et n représentent respectivement la m-ième ligne et la ni-ème colonne de la matrice, $f_m$ étant la m-ième fréquence normalisée de tarage.

Ce qui conduit à la solution :

$$\underline{w}_i = \left[ F^+ . F \right]^{-1} . F^+ . \underline{m}'_i \qquad (6)$$

où "+" en exposant correspond à l'opération de transposition conjuguée.

L'intérêt d'une telle approche réside dans le fait que la matrice

$$\left[ F^+ . F \right]^{-1} . F^+$$

(de dimension pxN) est constante et peut donc de ce fait être calculée une fois pour toute, ce qui rend aisée et peu coûteuse en puissance de calcul l'obtention de $\underline{w}_i$.

Un compromis apparaît alors sur le nombre de coefficients p. Une forte valeur pour ce dernier (c'est à dire proche de N) conduit à une erreur quadratique faible mais à une instabilité importante sur la fonction de transfert entre les fréquences mesurées $f_k$.

Une valeur optimale est comprise en N/2 et N/3, ce qui assure une correction à 0,5° et 0,1 dB près.

Le filtre 11i doit également être convolué avec un filtre passe bande pour assurer une atténuation en dehors de la bande utile.

Le principal problème posé pour le tarage des chaînes d'émission 10i est de rendre le dispositif 1 indépendant de la base d'antennes 3 à laquelle il est connecté. Cette indépendance permet d'utiliser différentes sortes de base d'antennes 3 pour la fonction AMRS (base d'antennes pentagonales, linéaires, etc.).

L'étape 6 de tarage des voies émission du procédé selon l'invention consiste à effectuer au préalable une calibration de la base d'antennes à la fréquence d'émission fe afin de disposer d'une table de calibration. Une fois cette calibration effectuée, un tarage est effectué de façon régulière (comme en réception) afin de suivre les variations de désappairage des chaînes d'émission 10i au cours du temps.

Pour cela, le signal d'émission est prélevé, à l'aide du coupleur 18i, situé en sortie du dispositif 1. Ce signal est réinjecté dans la chaîne de réception 11i, tarée au préalable.

Dans le cas d'un fonctionnement en duplex sur des fréquences différentes pour l'émission fe et la réception fr, il est nécessaire de permettre la réception, par les chaînes de réception 11i, de la fréquence d'émission fe, et d'effectuer le tarage des chaînes de réception 11i à cette fréquence fe.

Afin d'éviter tout problème de couplage entre les antennes de la base d'antennes 3, pouvant affecter la mesure (car la base d'antennes 3 n'est pas déconnectée), il ne faut pas injecter le même signal de tarage sur chacune des chaînes d'émission 10i car cela conduirait à recevoir sur une voie i le signal émis par les autres voies i, via la base d'antennes 3.

Une solution selon l'invention consiste à envoyer, sur chacune des chaînes d'émission 10i des signaux de tarage différents comportant des porteuses placées de manière orthogonale : une porteuse à la fréquence $f_1$ pour la chaîne d'émission $10_1$ de la voie 1, une porteuse à la fréquence $f_2$ pour la chaîne d'émission $10_2$ de la voie 2, et une porteuse à la fréquence $f_N$ pour la chaîne d'émission $10_N$ ; l'écart entre les porteuses est fixé par la durée d'observation T de la mesure. Ces signaux sont émis de manière synchrone sur chacune des voies i afin de permettre une mesure de phase précise. Ce synchronisme impose :

- un générateur de tarage numérique 19 commun aux différentes voies i,
- des convertisseurs analogique/numérique, non représentés, utilisant la même horloge d'échantillonnage, et
- une référence de fréquence commune distribuée sur chacune des voies i pour les fonctions de transposition.

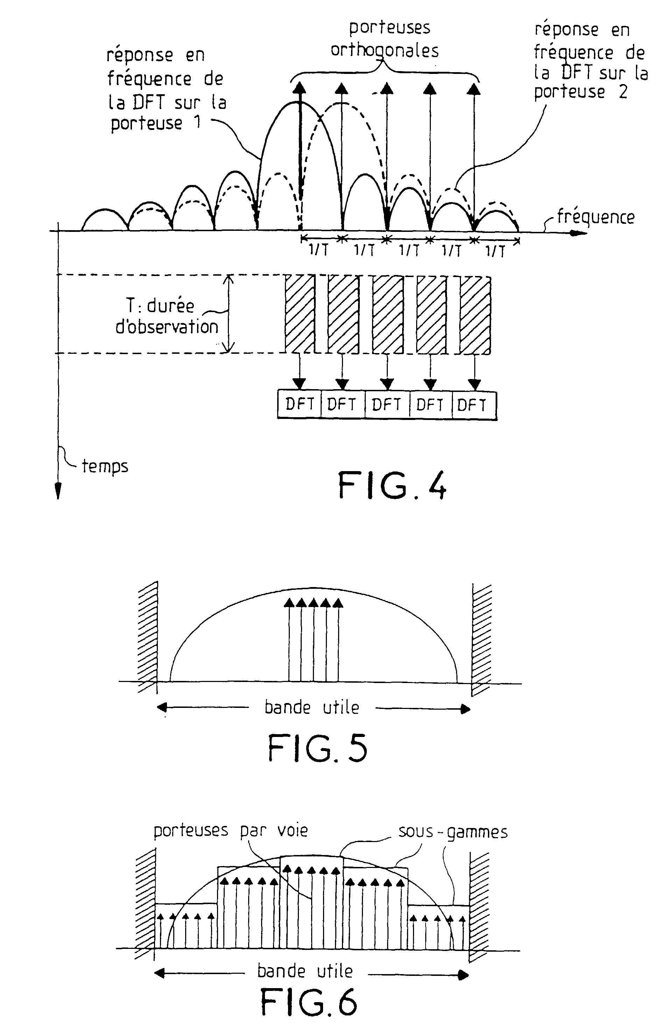

Comme représenté sur la figure 4, le principe d'orthogonalité consiste à sélectionner des fréquences 1/T telles que leur écart en fréquence soit inversement égal à la durée d'observation T. En effet, si l'on effectue une détection des porteuses par DFT ou FFT, sans fenêtre de pondération, la réponse fréquentielle est telle que les autres porteuses sont situées aux minimas de cette réponse (en sinx/x).

Deux solutions sont envisageables, suivant le niveau de distorsion engendré par la chaîne d'émission 10i. Si celle-ci n'engendre qu'un déphasage fixe pour toute la bande utile, la première solution est de générer autant de porteuses que de voies i, en les plaçant le plus possible au centre de la bande utile.

Cette première solution est illustrée par la figure 5.

Soit $m_i$ le gain complexe différentiel mesuré pour la voie i, alors le filtre d'égalisation 12i présente un gain complexe égal à :

$$m'_i = \frac{1}{m_i} \qquad (7)$$

Si les chaînes émissions 10i provoquent des distorsions de phase et d'amplitude importantes dans la bande utile, le filtre d'égalisation 12i effectue un filtrage. La méthode utilisée est donc la même que pour le tarage 5 à la réception, mais cette fois-ci avec des mesures effectuées par sous-gammes, mais toujours avec des fréquences différentes pour chacune des voies émission.

Cette deuxième solution est illustrée par la figure 6.

Soit $\underline{m}_i$ le vecteur des gains complexes différentiels mesurés pour chacune des sous-gammes de la voie i, alors le filtre d'égalisation 12i de la voie i est un filtre FIR dont le vecteur de coefficients s'écrit selon l'équation suivante :

$$\underline{w}_i = \left[ F^+ . F \right]^{-1} . F^+ . \underline{m}'_i \qquad (8)$$

avec $\underline{m}'_i$ le vecteur des gains complexes inverses.

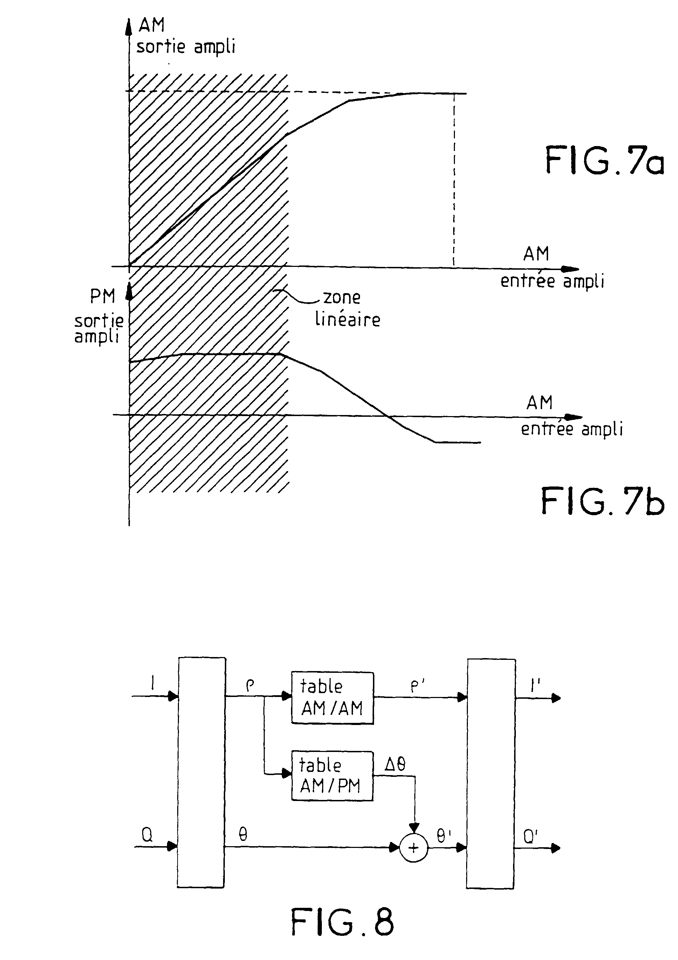

Toutes les mesures de tarage sont effectuées dans la zone linéaire des amplificateurs, non représentés, des différentes chaînes d'émission 10i. Malheureusement, les amplificateurs utilisés ont une amplification linéaire dans une zone restreinte de niveau d'entrée, comme illustré à la figure 7a.

Les amplificateurs provoquent en effet une distorsion de phase PM et d'amplitude AM qui dépend uniquement de l'amplitude de l'enveloppe modulante comme illustré à la figure 7b.

Le dispositif émission/réception AMRS 2 effectue de la formation de faisceaux en combinant plusieurs émissions avec des pondérations complexes différentes d'une voie à l'autre. Ceci a pour conséquence de présenter des signaux en entrée des amplificateurs des chaînes d'émission 10i, ayant des niveaux différents sur chaque voie i. Ainsi, les points de fonctionnement des amplificateurs ne sont pas les mêmes, ce qui entraîne une distorsion de phase différente pour chaque voie i.

Afin de pallier à ce problème de distorsion de phase et d'amplitude, le procédé selon l'invention effectue une pré-correction 9 des chaînes d'émission 10i. Celle-ci est obtenue grâce une mesure de la fonction de transfert en phase et amplitude des amplificateurs à l'aide d'un étage de pré-correction 24i. La mesure consiste à effectuer une détection de l'amplitude instantanée, ainsi que de la phase instantanée du signal modulant. Dans le cas d'un traitement en bande base :

$$\rho_k = \sqrt{I_k^2 + Q_k^2}$$

$$\theta_k = \text{arctg}\left(\frac{I_k}{Q_k}\right) \qquad (9)$$

où

$\rho_k$ : module instantané du signal
$\theta_k$ : phase instantanée du signal

soit :

$$I_k = \rho_k . \cos(\theta_k)$$

$$(10)$$

$$Q_k = \rho_k . \sin(\theta_k)$$

$I_k$ et $Q_k$ représentant respectivement les signaux complexes, en phase et en quadrature de phase.

Les fonctions de transfert des amplificateurs seront appelées f et g :

$$\rho_{out} = f(\rho_{in})$$

$$(11)$$

$$\theta_{out} = \theta_{in} + \Delta\theta_k = \theta_{in} + g(\rho_{in})$$

Cette étape 9 de pré-correction consiste donc à appliquer la fonction inverse de la fonction de transfert de l'amplificateur de la chaîne d'émission 10i, qui est stockée dans des tables AM/AM et AM/PM, comme représenté sur la figure 8.

$$\rho'_k = f'(\rho_k)$$

$$(12)$$

$$\theta_k = \theta_k + \Delta\theta_k = \theta_k + g'(\rho_k)$$

Les fonctions f' et g' de pré-correction sont obtenues en fonction des fonctions f et g de transfert de l'amplificateur en résolvant le système suivant :

$$\begin{cases} \rho''_k = f(\rho'_k) = f(f'(\rho_k)) = G.\rho_k \\ \\ \theta'_k = \theta_k + g(\rho'_k) = \theta_k + g(f'(\rho_k)) + g'(\rho_k) = \theta_k \end{cases} \qquad (13)$$

avec G le gain fixe du couple correcteur 24i - amplificateur de la chaîne d'amplification 10i.
soit :

$$\begin{cases} f'(\rho_k) = f^{-1}(G.\rho_k) \\ \\ g'(\rho_k) = -g\left(f^{-1}(G.\rho_k)\right) \end{cases} \qquad (14)$$

## Revendications

1. Procédé permettant le tarage régulier de la chaîne d'émission et de réception de chacune des voies formées par une station de base d'un système de radiocommunication avec des mobiles, comportant une base d'antennes émission/réception et un dispositif d'émission/réception multivoie, caractérisé en ce qu'il consiste après une étape de calibration (4) de la base d'antennes :

- dans une étape (5) de tarage des chaînes de réception relatives à chaque voie, à distribuer un premier signal de tarage déterminé, de manière synchrone sur chacune des chaînes de réception, à calculer un filtre d'égalisation inversant les fonctions de transfert relatives à chaque chaîne de réception,
- dans une étape (6) de tarage des chaînes d'émission relatives à chaque voie, à distribuer un deuxième signal de tarage déterminé, de manière synchrone sur chacune des chaînes d'émission, à prélever dans chacune des voies une partie du signal d'émission avant sa transmission à la base d'antennes pour le réinjecter dans les chaînes de réception, et à calculer un filtre d'égalisation inversant les fonctions de transfert relatives à chaque chaîne d'émission.
- à effectuer (7) la réception des signaux en provenance de la base d'antennes à travers les filtres d'égalisation précédemment calculés pour les chaînes de réception, ou l'émission des signaux en provenance du dispositif d'émission/réception multivoie à travers les filtres d'égalisation précédemment calculés pour les chaînes d'émission.

2. Procédé selon la revendication i, caractérisé en ce que, dans le cas où la fréquence (fe) du signal d'émission est différente de la fréquence (fr) du signal de réception (8), il consiste à effectuer le tarage des chaînes de réception à la fréquence du signal d'émission (fe) pour permettre le tarage des chaînes d'émission.

3. Procédé selon l'une quelconque des revendications 1 et 2, caractérisé en ce qu'une pré-correction (9) effectuée sur la chaîne d'émission de chacune des voies consiste à inverser les fonctions de transfert en amplitude et en phase des amplificateurs des chaînes d'émission de chacune des voies, mesurées dans l'analyse des signaux de tarage.

4. Procédé selon l'une quelconque des revendications 1 et 3 caractérisé en ce que l'analyse des signaux de tarage de la chaîne de réception consiste à effectuer une approximation de la fonction de transfert du filtre d'égalisation de la chaîne de réception par une méthode des moindres carrés.

5. Procédé selon l'une quelconque des revendications 1 à 4, caractérisé en ce que l'analyse des signaux de tarage de la chaîne d'émission consiste à effectuer une mesure de gains différentiels entre chacune des voies après le filtrage d'égalisation des chaînes de réception sur chacune des voies.

6. Procédé selon l'une quelconque des revendications 1 à 5, caractérisé en ce que le tarage de la chaîne d'émission de chacune des voies s'effectue à une puissance déterminée pour rester dans la zone de linéarité, de l'amplificateur de la chaîne d'émission.

7. Dispositif de tarage (1) des chaînes émission et réception des voies formées par une station de base d'un système de radiocommunication entre mobiles comportant une base d'antennes émission/réception (3) et un dispositif d'émission/réception multivoie (2), pour la mise en oeuvre du procédé selon l'une quelconque des revendications 1 à 6, caractérisé en ce qu'il est disposé en interface entre le dispositif d'émission/réception multivoie (2) et la base d'antennes (3),

en ce qu'il comporte pour chaque voie (i) :

- une chaîne d'émission (10i) et de réception (11i),
- un filtre d'égalisation (12i) du signal d'émission couplé en entrée de la chaîne d'émission (10i),
- un filtre d'égalisation (13i) du signal de réception couplé en sortie de la chaîne de réception (11i),
- un commutateur d'entrée (14i et 15i) et de sortie (16i et 17i) respectivement pour la chaîne d'émission (10i) et la chaîne de réception (11i) permettant au dispositif de passer dans les différents modes de fonctionnement : tarage réception, tarage émission, émission/réception,
- un coupleur (18) disposé en sortie de la chaîne d'émission (10i) après le commutateur de sortie (16i) de la chaîne d'émission (10i), permettant de prélever une partie du signal d'émission avant sa transmission à la base d'antennes (3) pour l'injecter à l'entrée de la chaîne de réception (11i),

et en ce qu'il comporte en commun pour toutes les voies (i) :

- un premier générateur (19) de signal de tarage des chaînes d'émission (10i) couplé à un premier module de distribution (20) distribuant un premier signal de tarage déterminé sur les chaînes d'émission (10i) de chacune des voies (i) par l'intermédiaire du commutateur d'entrée (14i) de la chaîne d'émission (10i),

- un deuxième générateur (21) de signal de tarage des chaînes de réception (11i) couplé à un deuxième module de distribution (22) distribuant un deuxième signal de tarage déterminé sur les chaînes de réception (11i) de chacune des voies (i) par l'intermédiaire du commutateur d'entrée (15i) de la chaîne de réception (11i), et

- un analyseur des signaux de tarage (23) permettant l'analyse des différents signaux de tarage pour adapter les filtres d'égalisation (12i et 13i) des chaînes d'émission (10i) et de réception (11i).

8. Dispositif selon la revendication 7, caractérisé en ce qu'un étage de pré-correction (24) de la chaîne d'émission (10i) est disposé entre le filtre d'égalisation (12i) de la chaîne d'émission (10i) et la chaîne d'émission (10i).

9. Dispositif selon l'une quelconque des revendications 7 et 8, caractérisé en ce que le filtre d'égalisation (13i) de la chaîne de réception (11i) est un filtre à réponse impulsionnelle finie dont les coefficients sont déterminés par une méthode des moindres carrés.

10. Dispositif selon l'une quelconque des revendications 7 à 9, caractérisé en ce que le signal émis par le générateur de tarage (19) des chaînes d'émission (10i) est constitué de porteuses orthogonales, et en ce qu'il est émis simultanément sur chacune des chaînes d'émission (10i).

11. Dispositif selon l'une quelconque des revendications 7 à 10, caractérisé en ce que le filtre d'égalisation (12i) de la chaîne d'émission (10i) est un filtre à réponse impulsionnelle finie dont les coefficients sont déterminés par une méthode des moindres carrés.

**Patentansprüche**

1. Verfahren, das einen regelmäßigen Abgleich der Sende- und der Empfangskette jedes der von einer Basisstation eines Funkverkehrssystems mit mobilen Teilnehmern gebildeten Kanäle erlaubt, mit einer Sende/Empfangsantennenbasis und einer Mehrkanal- Sende/Empfangsvorrichtung, dadurch gekennzeichnet, daß es nach einem Verfahrensschritt (4) der Kalibrierung der Antennenbasis darin besteht,

- in einem Verfahrensschritt (5) des Abgleichs der Empfangsketten bezüglich jedes Kanals ein erstes bestimmtes Abgleichsignal synchron auf alle Empfangsketten zu verteilen und dann ein Entzerrungsfilter zu berechnen, das die Transferfunktionen bezüglich jeder Empfangskette invertiert,

- in einem Verfahrensschritt (7) des Abgleichs der Sendeketten bezüglich jedes Kanals ein zweites bestimmtes Abgleichsignal synchron auf alle Sendeketten zu verteilen, aus jedem Kanal einen Teil des Sendesignals vor der Übertragung auf die Antennenbasis zu entnehmen und ihn wieder in die Empfangskette einzuspeisen, und dann ein Entzerrungsfilter zu berechnen, das die Transferfunktionen bezüglich jedes Sendekanals invertiert,

- die von der Antennenbasis über die vorher für die Empfangsketten berechneten Entzerrungsfilter kommenden Signale zu empfangen oder Signale über die vorher für die Sendeketten berechneten Entzerrungsfilter auszusenden, die von der Mehrkanal-Sende/Empfangsvorrichtung stammen (Schritt 7).

2. Verfahren nach Anspruch 1, dadurch gekennzeichnet, daß für den Fall, daß die Frequenz (fe) des Sendesignals sich von der Frequenz (fr) des Empfangssignals unterscheidet, das Verfahren darin besteht (Schritt 8), den Abgleich der Empfangsketten auf die Frequenz (fe) des Sendesignals durchzuführen, um den Abgleich der Sendeketten zu erlauben.

3. Verfahren nach einem beliebigen der Ansprüche 1 und 2, dadurch gekennzeichnet, daß eine Vorkorrektur (Schritt 9) in der Sendekette jedes der Kanäle durchgeführt wird, die darin besteht, die Transferfunktionen hinsichtlich Amplitude und Phase der Verstärker der Sendeketten jedes der Kanäle zu invertieren, die bei der Analyse der Abgleichsignale gemessen wurden.

4. Verfahren nach einem beliebigen der Ansprüche 1 und 3, dadurch gekennzeichnet, daß die Analyse der Abgleichsignale der Empfangskette darin besteht, eine Annäherung der Transferfunktion des Entzerrungsfilters der Empfangskette durch eine Methode der kleinsten Quadrate durchzuführen.

5. Verfahren nach einem beliebigen der Ansprüche 1 bis 4, dadurch gekennzeichnet, daß die Analyse der Abgleichsignale der Sendekette darin besteht, eine Messung der differentiellen Verstärkungsgrade zwischen jedem der Kanäle nach der Entzerrungsfilterung der Empfangsketten auf jedem der Kanäle durchzuführen.

6. Verfahren nach einem beliebigen der Ansprüche 1 bis 5, dadurch gekennzeichnet, daß der Abgleich der Sendekette jedes der Kanäle bei einer bestimmten Leistung erfolgt, um in der Linearitätszone des Verstärkers der Sendekette zu bleiben.

7. Abgleichvorrichtung (1) für Sende- und Empfangsketten der von einer Basisstation eines Funkverkehrssystems zwischen mobilen Teilnehmern gebildeten Kanäle, mit einer Sende/Empfangsantennenbasis (3) und einer Mehrkanal-Sende/-Empfangsvorrichtung (2) zur Durchführung des Verfahrens nach einem beliebigen der Ansprüche 1 bis 6, dadurch gekennzeichnet, daß sie zwischen der Mehrkanal-Sende/Empfangsvorrichtung (2) und der Antennenbasis (3) liegt und für jeden Kanal (i) aufweist:

- eine Sendekette (10i) und eine Empfangskette (11i);
- ein Entzerrungsfilter (12i) für das Sendesignal, das an den Eingang der Sendekette (10i) gekoppelt ist;
- ein Entzerrungsfilter (13i) für das Empfangssignal, das an den Ausgang der Verstärkungskette (lli) gekoppelt ist;
- einen Eingangsschalter (14i und 15i) sowie einen Ausgangsschalter (16i und 17i) für die Sendekette (10i) beziehungsweise die Empfangskette (lli), um die Vorrichtung auf die verschiedenen Betriebsmodi umschalten zu können, nämlich den Abgleich in Empfangsrichtung, den Abgleich in Senderichtung, Sendung/Empfang;
- einen Koppler (18i) am Ausgang der Sendekette (10i) hinter dem Ausgangsschalter (16i) der Sendekette (10i), mit dem ein Teil des Sendesignals vor seiner Weitergabe an die Antennenbasis (3) entnommen werden kann, um an den Eingang der Empfangskette (lli) angelegt zu werden,

   und daß sie für alle Kanäle (i) gemeinsam aufweist:

- einen ersten Generator (19) für ein Abgleichsignal der Sendeketten (10i), der an einen ersten Verteilmodul (20) zur Verteilung eines ersten bestimmten Abgleichsignals auf die Sendeketten (10i) jedes der Kanäle (i) über den Eingangsschalter (14i) der Sendekette (10i) gekoppelt ist;
- einen zweiten Generator (21) für ein Abgleichsignal der Empfangsketten (11i), der an einen zweiten Verteilmodul (22) zur Verteilung eines zweiten bestimmten Abgleichsignals auf die Empfangsketten (11i) jedes der Kanäle (i) über den Eingangsschalter (15i) der Empfangskette (11i) gekoppelt ist,
- und einen Analysator (23), der eine Analyse der verschiedenen Abgleichsignale durchführt und die Entzerrungsfilter (12i bzw. 13i) der Sende- bzw. Empfangsketten (10i, 11i) anpaßt.

8. Vorrichtung nach Anspruch 7, dadurch gekennzeichnet, daß eine Vorkorrekturstufe (24) der Sendekette (10i) zwischen dem Entzerrungsfilter (12i) der Sendekette (10i) und der Sendekette (10i) liegt.

9. Vorrichtung nach einem beliebigen der Ansprüche 7 und 8, dadurch gekennzeichnet, daß das Entzerrungsfilter (13i) der Empfangskette (11i) ein Filter mit beschränkter Impulsantwort ist, dessen Koeffizienten durch eine Methode der kleinsten quadratischen Fehler bestimmt werden.

10. Vorrichtung nach einem der Ansprüche 7 bis 9, dadurch gekennzeichnet, daß das vom Abgleichsignalgenerator (19) der Sendeketten (10i) ausgesendete Signal aus orthogonalen Trägern besteht und gleichzeitig über jede der Sendeketten ausgesendet wird.

11. Vorrichtung nach einem beliebigen der Ansprüche 7 bis 10, dadurch gekennzeichnet, daß das Entzerrungsfilter (12i) der Sendekette (10i) ein Filter mit beschränkter Impulsantwort ist, dessen Koeffizienten durch eine Methode der kleinsten quadratischen Fehler bestimmt werden.

## Claims

1. Process allowing the regular adjusting of the transmission and reception chain of each of the paths formed by a base station of a system for radio communication with mobiles, including a transmission/reception antenna base and a multipath transmission/reception device, characterized in that it consists after a step of calibration (4) of the antenna base:

EP 0 834 225 B1

- within a step (5) for adjusting the reception chains relating to each path, in distributing a first specified adjustment signal, synchronously over each of the reception chains, in calculating an equalization filter inverting the transfer functions relating to each reception chain,
- within a step (6) for adjusting the transmission chains relating to each path, in distributing a second specified adjustment signal, synchronously over each of the transmission chains, in extracting from each of the paths a part of the transmission signal before it is sent to the antenna base so as to re-inject it into the reception chains, and in calculating an equalization filter inverting the transfer functions relating to each transmission chain,
- in performing (7) the reception of the signals originating from the antenna base via the equalization filters previously calculated for the reception chains, or the transmission of the signals originating from the multipath transmission/reception device via the equalization filters previously calculated for the transmission chains.

2. Process according to Claim 1, characterized in that, in the case in which the frequency (fe) of the transmission signal is different from the frequency (fr) of the reception signal (8), it consists in adjusting the reception chains to the frequency of the transmission signal (fe) so as to allow adjustment of the transmission chains.

3. Process according to either one of Claims 1 or 2, characterized in that a pre-correction (9) performed on the transmission chain of each of the paths consists in inverting the amplitude and phase transfer functions of the amplifiers of the transmission chains of each of the paths, measured in the analysis of the adjustment signals.

4. Process according to either one of Claims 1 or 3, characterized in that the analysis of the signals for adjusting the reception chain consists in approximating the transfer function of the equalization filter of the reception chain via a method of least squares.

5. Process according to any one of Claims 1 to 4, characterized in that the analysis of the signals for adjusting the transmission chain consists in measuring differential gains between each of the paths after the equalization filtering of the reception chains on each of the paths.

6. Process according to any one of Claims 1 to 5, characterized in that the adjusting of the transmission chain of each of the paths is performed at a specified power so as to remain within the zone of linearity of the amplifier of the transmission chain.

7. Device for adjusting (1) the transmission and reception chains of the paths formed by a base station of a system for radio communication between mobiles including a transmission/reception antenna base (3) and a multipath transmission/reception device (2), for implementing the process according to any one of Claims 1 to 6, characterized in that it is interfaced between the multipath transmission/reception device (2) and the antenna base (3),
in that it includes for each path (i):

- a transmission (10i) and reception (11i) chain,
- an equalization filter (12i) for the transmission signal coupled at the input of the transmission chain (10i),
- an equalization filter (13i) for the reception signal coupled at the output of the reception chain (11i),
- an input switch (14i and 15i) and output switch (16i and 17i) for the transmission chain (10i) and the reception chain (11i) respectively enabling the device to enter the various modes of operation: reception adjustment, transmission adjustment, transmission/reception,
- a coupler (18) placed at the output of the transmission chain (10i) after the output switch (16i) of the transmission chain (10i) making it possible to extract a part of the transmission signal before it is sent to the antenna base (3) so as to inject it at the input of the reception chain (11i),

and in that it includes in common for all the paths (i):

- a first generator (19) of a signal for adjusting the transmission chains (10i) which is coupled to a first distribution module (20) distributing a first specified adjustment signal over the transmission chains (10i) of each of the paths (i) by way of the input switch (14i) of the transmission chain (10i),
- a second generator (21) of a signal for adjusting the reception chains (11i) which is coupled to a second distribution module (22) distributing a second specified adjustment signal over the reception chains (11i) of each of the paths (i) by way of the input switch (15i) of the reception chain (11i), and
- an analyser of the adjustment signals (23) allowing analysis of the various adjustment signals so as to adapt the equalization filters (12i and 13i) of the transmission (10i) and reception (11i) chains.

11

8. Device according to Claim 7, characterized in that a pre-correction stage (24) of the transmission chain (10i) is placed between the equalization filter (12i) of the transmission chain (10i) and the transmission chain (10i).

9. Device according to either one of Claims 7 or 8, characterized in that the equalization filter (13i) of the reception chain (11i) is a finite impulse response filter whose coefficients are determined by a method of least squares.

10. Device according to any one of Claims 7 to 9, characterized in that the signal transmitted by the adjustment generator (19) of the transmission chains (10i) is made up of orthogonal carriers, and in that it is transmitted simultaneously over each of the transmission chains (10i).

11. Device according to any one of Claims 7 to 10, characterized in that the equalization filter (12i) of the transmission chain (10i) is a finite impulse response filter whose coefficients are determined by a method of least squares.

EP 0 834 225 B1

base d'antennes

~3

dispositif de tarage et de calibration

~1

émission

réception

dispositif d'émission et de réception multivoie

~2

# FIG. 1

13

```
┌─────────────────────────┐
│      calibration        │ ──4
│      antennes           │
│  émission / réception   │
└─────────────────────────┘
            │
            ▼
┌─────────────────────────┐
│ tarage chaînes réception│ ─5
│    sur  fréquence       │
│      réception          │
└─────────────────────────┘
            │
            ▼                          ┌──────────────────────────┐ ──8
          ◇ fe = fr? ◇ ──── non ─────▶ │ tarage chaînes réception │
            │                          │  sur fréquence  émission │
           oui                         └──────────────────────────┘
            │                                     │
            ▼                                     │
┌─────────────────────────┐                      │
│ tarage  chaînes émission │ ◀───────────────────┘
└─────────────────────────┘
            │  6
            ▼
┌ ─ ─ ─ ─ ─ ─ ─ ─ ─ ─ ─ ─ ┐
   pré - correction          ──9
│  amplification émission │
└ ─ ─ ─ ─ ─ ─ ─ ─ ─ ─ ─ ─ ┘
            │
            ▼
┌─────────────────────────┐
│   émission / réception   │ ──7
└─────────────────────────┘
```

# FIG.2

BASE D'ANTENNES

DISPOSITIF E/R MULTIVOIE

# FIG.3

FIG.4

FIG.5

FIG.6

FIG.7a

FIG.7b

FIG.8